# EUROPÄISCHE PATENTANMELDUNG

(11) **EP 1 548 459 A1**
(43) Veröffentlichungstag der Anmeldung: **29.06.2005**
(21) Anmeldenummer: 04006129.3
(22) Anmeldetag: 15.03.2004
(51) Int. Cl.: G01S 7/481, G01S 7/484

(54) **Optoelektronische Erfassungseinrichtung**

(30) Priorität: 23.12.2003 DE 10360950
(71) Anmelder: Sick AG, 79183 Waldkirch, Breisgau (DE)
(72) Erfinder: Jahn, Axel Dipl.-Ing., 79183 Waldkirch (DE)
(74) Vertreter: Manitz, Finsterwald & Partner GbR

(57) **Zusammenfassung**

Die Erfindung betrifft eine optoelektronische Erfassungseinrichtung, insbesondere einen Laserscanner, mit wenigstens einem Sender zur Aussendung bevorzugt gepulster elektromagnetischer Strahlung, zumindest einem dem Sender zugeordneten Empfänger und wenigstens einer Ablenkeinrichtung, mit der von dem Sender ausgesandte primäre Sendestrahlung als sekundäre Sendestrahlung in einen Überwachungsbereich und aus dem Überwachungsbereich reflektierte Strahlung auf den Empfänger lenkbar ist, wobei die optischen Achsen des Senders und des Empfängers auseinander fallen, wobei eine wenigstens bereichsweise gekrümmte Frontscheibe vorgesehen ist, durch welche zumindest die Sendestrahlung hindurchtritt, und wobei im Inneren der Erfassungseinrichtung wenigstens eine Blende angeordnet ist, die den Empfänger zumindest gegenüber einem Teil der von der Innenseite der Frontscheibe reflektierten Störstrahlung abschirmt.

## Beschreibung

Die Erfindung betrifft eine optoelektronische Erfassungseinrichtung, insbesondere einen Laserscanner, mit wenigstens einem Sender zur Aussendung bevorzugt gepulster elektromagnetischer Strahlung, zumindest einem dem Sender zugeordneten Empfänger und wenigstens einer Ablenkeinrichtung, mit der von dem Sender ausgesandte primäre Sendestrahlung als sekundäre Sendestrahlung in einen Überwachungsbereich und aus dem Überwachungsbereich reflektierte Strahlung auf den Empfänger lenkbar ist, wobei die optischen Achsen des Senders und des Empfängers auseinander fallen.

Derartige Erfassungseinrichtungen sind grundsätzlich bekannt. Im Gegensatz zu Systemen, bei denen die optischen Achsen des Senders und des Empfängers koaxial angeordnet sind, betrifft die Erfindung biaxiale Systeme, bei denen die optischen Achsen des Senders und des Empfängers auseinander fallen. Bei bestimmten Applikationen, auf die an dieser Stelle nicht näher eingegangen werden soll, haben sich derartige biaxiale Systeme als vorteilhaft erwiesen.

Aus verschiedenen Gründen, auf die hier ebenfalls nicht näher eingegangen werden soll, kann es zumindest in bestimmten Applikationen vorteilhaft sein, eine Frontscheibe der Erfassungseinrichtung gekrümmt und insbesondere als Kugel oder Teil einer Kugel auszubilden. Frontscheiben, die in den meisten Fällen Strahlungsdurchtrittsflächen sowohl für die Sendestrahlung als auch für die Empfangsstrahlung bilden, kommen vor allem bei geschlossenen Geräten zum Einsatz, bei denen die empfindlichen Bauteile der Erfassungseinrichtung durch ein Gehäuse vor Umwelteinflüssen geschützt sind. Die Frontscheibe bildet dann zumindest einen Teil des Gehäuses.

Es ist nun festgestellt worden, dass es bei Erfassungseinrichtungen mit gekrümmten Frontscheiben zu Problemen aufgrund der von der Innenseite der Frontscheibe reflektierten Sendestrahlung kommen kann. Wenn beispielsweise der Sender ein näherungsweise paralleles Strahlungsbündel mit geringer Divergenz auf eine Ablenkfläche der Ablenkeinrichtung aussendet und die Ablenkeinrichtung diese primäre Sendestrahlung als sekundäre Sendestrahlung über die Frontscheibe in den Überwachungsbereich ablenkt, dann kann die Innenseite der Frontscheibe einen Teil der sekundären Sendestrahlung zurück in das Innere der Erfassungseinrichtung reflektieren. In Abhängigkeit von den geometrischen Gegebenheiten an der Erfassungseinrichtung kann diese Störstrahlung auf den Empfänger treffen, also direkt auf eine Empfangseinheit - z.B. in Form eines Einzelempfängers oder eines Empfangsdioden-Arrays - oder auf eine der Empfangseinheit vorgelagerte Empfangsoptik z.B. in Form einer Linse.

Ist die Innenseite der Frontscheibe nicht vergütet, so kann mit etwa 8% bis 10% der ausgesandten Strahlungsenergie gerechnet werden, die als Störstrahlung zurück in das Innere der Erfassungseinrichtung reflektiert wird. Wird z.B. als Strahlungsquelle ein Pulslaser mit einer Pulsleistung von etwa 20 W eingesetzt, so besitzt die reflektierte Störstrahlung eine Leistung von etwa 1,6 W. Selbst bei entspiegelter Innenseite der Frontscheibe treten aber noch signifikante Strahlungsleistungen im Bereich von etwa 100 mW auf. Durch spezielle Maßnahmen, wie beispielsweise das Vorsehen eines Lichtschachtes hoher Dämpfung im Empfangspfad, kann die Leistung der Störstrahlung zwar weiter verringert werden. Allerdings können Linsenfehler, unvollkommene Oberflächen sowie Verschmutzungen zu einer diffusen Aufstreuung der Störstrahlung führen, was die auf den Empfänger fallende Störstrahlung wieder erhöht. Um eine möglichst hohe Empfindlichkeit bereit zu stellen, weisen die Empfangseinheiten teilweise extrem hohe Detektivitäten auf. Extrem niedrige Strahlungsleistungen im Bereich von etwa 1 nW bis 100 nW können dann bereits genügen, um die Frontscheibe als Objekt im Überwachungsbereich zu "sehen", was natürlich unerwünscht ist. Um dies zu verhindern, sollten die von der Innenseite der Frontscheibe reflektierte Störstrahlung mindestens um einen Faktor 10⁵ bis 10⁸ gedämpft werden.

Aufgabe der Erfindung ist es daher, eine Erfassungseinrichtung der eingangs genannten Art bereit zu stellen, bei der auf möglichst einfache Weise eine Störung des Empfängers durch unerwünschte Reflexionen der Sendestrahlung so weit wie möglich vermieden wird, wobei sowohl der Sendepfad als auch der Empfangspfad der Erfassungseinrichtung möglichst unbeeinflusst bleiben sollen.

Die Lösung dieser Aufgabe erfolgt durch die Merkmale des Anspruchs 1 und insbesondere dadurch, dass eine wenigstens bereichsweise gekrümmte Frontscheibe vorgesehen ist, durch welche zumindest die Sendestrahlung hindurch tritt, und dass im Inneren der Erfassungseinrichtung wenigstens eine Blende angeordnet ist, die den Empfänger zumindest gegenüber einem Teil der von der Innenseite der Frontscheibe reflektierten Störstrahlung abschirmt.

Umfangreiche Untersuchungen unter Verwendung aufwendiger Simulationsrechnungen haben zu dem überraschenden Ergebnis geführt, dass es möglich ist, im Inneren einer Erfassungseinrichtung eine oder mehrere Blenden anzuordnen, die den Empfänger in ausreichender Weise abschirmt bzw. abschirmen, ohne die Funktionsfähigkeit der Erfassungseinrichtung negativ zu beeinflussen. Insbesondere hat sich gezeigt, dass mit einer Blende, wie sie die erfindungsgemäße Lösung vorschlägt, folgende Kriterien erfüllt werden können:
- Die Oberfläche der erfindungsgemäßen Blende lässt sich derart ausbilden, dass zumindest ein wesentlicher Teil der Störstrahlung von der Blende absorbiert wird. Die Ausgestaltung der Blendenoberfläche - z.B. die Einfärbung eines für die Blende verwendeten Kunststoffmaterials - kann in Abhängigkeit von der Wellenlänge der verwendeten Strahlung erfolgen.
- Die Oberfläche der erfindungsgemäßen Blende kann gleichzeitig derart ausgebildet werden, dass sie spiegelnde Eigenschaften für denjenigen Teil der Störstrahlung aufweist, der nicht absorbiert wird. Auf diese Weise kann durch entsprechende Formgestaltung der Blende die nicht absorbierte Störstrahlung gezielt weiterreflektiert und in unkritische Richtungen abgelenkt werden.
   Alternativ kann aber auch eine gezielt diffus streuende Ausgestaltung der Blendenoberfläche vorgesehen werden, um die Leistungsdichte der nicht absorbierten Störstrahlung möglichst gering zu halten.
- Ohne eine ausreichende Abschirmwirkung zu verlieren, kann die erfindungsgemäße Blende derart im Inneren der Erfassungseinrichtung angeordnet werden, dass der Sendepfad für die Sendestrahlung unbeeinflusst bleibt, d.h. die Sendestrahlung nicht geschnitten wird, und zwar unabhängig von der relativen Anordnung zwischen der Blende und der Ablenkeinrichtung. Bei einer bestimmten Art des Aufbaus der Erfassungseinrichtung, auf die nachstehend näher eingegangen wird, ist die Austrittshöhe der sekundären Sendestrahlung abhängig von der Orientierung der Ablenkeinrichtung relativ zum Sender. Die Austrittshöhe der Sendestrahlung wiederum beeinflusst die Ausbreitung der Störstrahlung im Inneren der Erfassungseinrichtung, was zur Folge hat, dass manche Relativorientierungen zwischen Ablenkeinrichtung und Sender weniger kritisch sind als andere. Erfindungsgemäß lässt sich die Blende derart ausgestalten und anordnen, dass für alle geometrischen Verhältnisse innerhalb der Erfassungseinrichtung jeweils auch bei der kritischsten Konstellation eine ausreichende Abschirmung des Empfängers durch die Blende gewährleistet ist.
- Erfindungsgemäß lässt sich eine ausreichende Abschirmwirkung auch dann erzielen, wenn die Blende derart ausgebildet und angeordnet ist, dass der Empfangspfad für die aus dem Überwachungsbereich reflektierte Strahlung nur in vernachlässigbarem Umfang oder allenfalls derart beeinflusst wird, dass der Empfangsverlust bzw. die Reduzierung der wirksamen Empfangsapertur unter einer noch akzeptierbaren Grenze bleibt.
- Bei einem bestimmten Aufbau der Erfassungseinrichtung, auf den nachstehend näher eingegangen wird, kann es sinnvoll sein, die Blende möglichst tief bezüglich der Austrittshöhe der sekundären Sendestrahlung anzuordnen, um auf diese Weise eine wirksame Breite bzw. einen wirksamen Winkelbereich der Blende zu maximieren. Es hat sich gezeigt, dass dies mit der erfindungsgemäßen Blende realisiert werden kann, d.h. dass auch über relativ große Breiten bzw. Winkelbereiche eine ausreichende Abschirmwirkung erzielt werden kann, ohne dass die Funktionsfähigkeit der Erfassungseinrichtung beeinträchtigt wird, z.B. ohne dass die Blende in den Drehbereich eines die Ablenkeinrichtung der Erfassungseinrichtung bildenden Drehspiegels hinein ragt. Bevorzugte Ausführungsformen der Erfindung sind auch in den abhängigen Ansprüchen, der Beschreibung sowie der Zeichnung angegeben.

So ist bevorzugt vorgesehen, dass die Blende eine Abschirmfläche für die Störstrahlung aufweist, deren Form in Abhängigkeit von dem mittels der Ablenkeinrichtung erzeugten Ablenkwinkel für die Strahlung ausgebildet ist.

Diesem Ausführungsbeispiel liegt die Erkenntnis zugrunde, dass der Verlauf der Empfangsstrahlung von der Größe des Ablenkwinkels der Ablenkeinrichtung abhängig ist. Wenn - wie in einem weiteren bevorzugten Ausführungsbeispiel der Erfindung - eine Ablenkung der Strahlung um 90° vorgesehen ist, dann bildet bei sich drehender Ablenkeinrichtung die Empfangsstrahlung eine Ebene. In diesem Fall wird die Abschirmfläche der Blende entsprechend eben ausgebildet, um auf diese Weise die Reduzierung der Empfangsapertur durch die Blende zu minimieren. Bei von 90° abweichenden Ablenkwinkeln geht bei sich drehender Ablenkeinrichtung die erwähnte Empfangsebene in eine Kegelform über. Zur Minimierung des Empfangsverlustes kann in diesem Fall die Abschirmfläche der Blende in Form eines entsprechenden Kegelabschnitts vorgesehen werden. Allgemein wird folglich die Abschirmfläche in Abhängigkeit von dem Ablenkwinkel derart ausgebildet, dass sie parallel zu der so genannten Empfangsfläche, d.h. der von der Empfangsstrahlung gebildeten Fläche, verläuft.

Die obigen Ausführungen machen deutlich, dass die Form der Blende erfindungsgemäß davon abhängig gemacht werden kann, ob mit einer feststehenden Ablenkeinrichtung oder mit einer bewegbaren, insbesondere drehbaren, Ablenkeinrichtung gearbeitet wird. Im ersteren Fall "blickt" die Erfassungseinrichtung in eine einzige Richtung. Im letzteren Fall handelt es sich bei der Erfassungseinrichtung um einen Scanner, mit dem die Umgebung über einen Winkelbereich von bis zu 360° abgetastet werden kann.

Vorzugsweise ist die Ablenkfläche der Blende eine ebene Fläche. Die Fläche kann teilkreisförmig sein und insbesondere die Form eines Teils eines Kreissektors oder Kreisringes aufweisen.

Ferner wird erfindungsgemäß vorgeschlagen, die Blende platten- oder scheibenförmig auszubilden. Dabei ist es bevorzugt, die Blende möglichst dünn auszuführen, um Empfangsverluste zu minimieren.

Gemäß einem weiteren Ausführungsbeispiel der Erfindung ist die Blende mit der Frontscheibe verbunden. Die Blende kann einen Bestandteil der Frontscheibe bilden, d.h. einstückig mit der Frontscheibe ausgebildet sein. Die abschirmende Eigenschaft der Blende gegenüber der Frontscheibe kann beispielsweise durch nachträgliches Lackieren der Blende realisiert werden. Alternativ können Frontscheibe und Blende in Form separater Bauteile vorgesehen sein, die z.B. aus dem gleichen Material bestehen und sich beispielsweise lediglich hinsichtlich in der Einfärbung voneinander unterscheiden. Die Verbindung von Blende und Frontscheibe erfolgt bevorzugt durch Verkleben.

Wie vorstehend bereits erwähnt, kann die Erfassungseinrichtung eine Ablenkeinrichtung aufweisen, die zu einer Bewegung relativ zum Sender und zum Empfänger antreibbar ist, wobei die Frontscheibe relativ zur Ablenkeinrichtung feststehend angeordnet ist. Die Ablenkeinrichtung bewegt sich folglich sowohl relativ zum Sender und zum Empfänger als auch relativ zur Frontscheibe.

Bei einer derartigen Erfassungseinrichtung kann gemäß dem vorstehend bereits erwähnten Ausführungsbeispiel die Blende relativ zur Frontscheibe feststehend angeordnet und z.B. unmittelbar mit der Frontscheibe verbunden sein.

Alternativ ist gemäß einer bevorzugten Ausführungsform der Erfindung vorgesehen, dass die Blende relativ zu der Frontscheibe bewegbar ist. Insbesondere wird die Blende gemeinsam mit der Ablenkeinrichtung bewegt. Hierzu kann die Blende direkt oder indirekt mit der Ablenkeinrichtung verbunden sein, so dass die Blende mit der Ablenkeinrichtung mitbewegt wird, wodurch für die Blende kein eigener Antrieb erforderlich ist.

Im Fall einer indirekten Anbindung der Blende an die bewegbare Ablenkeinrichtung kann die Blende an einem direkt mit der Ablenkeinrichtung verbundenen Träger angebracht sein.

Der Träger kann zwischen der Frontscheibe und einer Ablenkfläche der Ablenkeinrichtung angeordnet sein. Des Weiteren kann der Träger sowohl den Sendepfad für die in den Überwachungsbereich ausgesandte Sendestrahlung als auch den Empfangspfad für die aus dem Überwachungsbereich reflektierte Empfangsstrahlung abdecken, wobei es alternativ aber auch möglich ist, dass der Träger derart geformt und/oder angeordnet ist, dass entweder der Sendepfad oder der Empfangspfad durch den Träger unbeeinflusst ist.

Vorzugsweise ist der Träger aus einem für die verwendete Strahlung durchlässigen Material hergestellt.

Beispielsweise kann der Träger in Form einer im Wesentlichen senkrecht zur Ausbreitungsrichtung der sekundären Sendestrahlung verlaufenden Scheibe vorgesehen sein. Die Blende kann mit dieser Scheibe verbunden sein, z.B. in einen Schlitz der Scheibe eingesteckt sein, während die Scheibe selbst über einen flächig ausgebildeten, z.B. in Form einer Schale mit halbkreisförmigem Querschnitt vorgesehenen Halter oder über seitliche Haltearme oder -streben mit der z.B. in Form eines Spiegels vorgesehenen Ablenkeinrichtung verbunden ist.

Alternativ kann der Träger in Form einer Linse oder eines Teils einer Kugel vorgesehen sein.

Gemäß einem weiteren Ausführungsbeispiel der Erfindung ist die Blende von einem der Ablenkeinrichtung vorgelagerten Abschirmelement gebildet, wobei eine Abschirmfläche für die Störstrahlung von einer Außenwand des Abschirmelementes gebildet ist.

Das Abschirmelement kann in Form eines Zylinders, insbesondere eines hohlzylindrischen Rohrabschnitts, vorgesehen sein, dessen Längsachse im Wesentlichen senkrecht zur Ausbreitungsrichtung der primären Sendestrahlung und im Wesentlichen parallel zur Ausbreitungsrichtung der sekundären Sendestrahlung verläuft.

Ferner wird erfindungsgemäß vorgeschlagen, dass das Abschirmelement mit einem als Ablenkeinrichtung vorgesehenen Prisma verbunden und insbesondere direkt auf eine Strahlungseintritts- und -austrittsfläche des Prismas aufgesetzt ist.

Bei der Verwendung eines derartigen Abschirmelementes ist kein Aufbau aus Blende und separatem Träger und/oder Halter erforderlich. Das z.B. in Form eines Hohlzylinders vorgesehene Abschirmelement kann direkt auf das die Ablenkeinrichtung bildende Prisma aufgesetzt werden und mit seiner Außenwand die Abschirmfläche bilden.

Wie bereits vorstehend erwähnt, kann im Fall einer bewegbaren Ablenkeinrichtung diese zu einer Drehbewegung relativ zum Sender und zum Empfänger antreibbar sein.

In einer bevorzugten Konfiguration der erfindungsgemäßen Erfassungseinrichtung verläuft die Drehachse der Ablenkeinrichtung im Wesentlichen parallel zur Ausbreitungsrichtung der primären Sendestrahlung. Beträgt die Neigung einer z.B. von der reflektierenden Fläche eines Spiegels oder von einer Seite eines Prismas gebildeten Ablenkfläche gegenüber der Ausbreitungsrichtung der primären Sendestrahlung 45°, so wird die primäre Sendestrahlung um 90° abgelenkt und als sekundäre Strahlung in einer horizontalen Ebene über die Frontscheibe ausgesendet, wenn die primäre Sendestrahlung sich in vertikaler Richtung ausbreitet.

Der gekrümmte Bereich der Frontscheibe kann gemäß einem bevorzugten Ausführungsbeispiel zumindest als Teil einer Kugel ausgebildet sein, wobei der Kugelmittelpunkt auf der Drehachse der Ablenkeinrichtung und auf einer Ablenkfläche der Ablenkeinrichtung gelegen sein kann.

Des Weiteren ist bevorzugt vorgesehen, dass die Drehachse der Ablenkeinrichtung mit dem Empfangspfad für die aus dem Überwachungsbereich reflektierte Empfangsstrahlung zusammenfällt.

Wenn ein der Ablenkeinrichtung vorgelagertes Abschirmelement, insbesondere ein hohlzylindrischer Rohrabschnitt, vorgesehen ist, dann ist dieses Abschirmelement vorzugsweise derart angeordnet, dass sich dessen Längsachse mit der Drehachse der Ablenkeinrichtung auf deren Ablenkfläche schneidet.

Die Erfindung wird im Folgenden beispielhaft unter Bezugnahme auf die Zeichnung beschrieben. Es zeigen:
- Fig. 1: schematisch eine Seitenansicht eines Laserscanners gemäß einer ersten Ausführungsform der Erfindung in einer ersten Drehstellung der Ablenkeinrichtung,
- Fig. 2: eine perspektivische Ansicht des Laserscanners von Fig. 1 in einer zweiten Drehstellung der Ablenkeinrichtung,
- Fig. 3: den Laserscanner von Fig. 2 in einer Draufsicht,
- Fig. 4: schematisch in einer perspektivischen Ansicht einen Laserscanner gemäß einer weiteren Ausführungsform der Erfindung in einer ersten Drehstellung der Ablenkeinrichtung,
- Fig. 5: den Laserscanner von Fig. 4 in einer Seitenansicht,
- Fig. 6: den Laserscanner von Fig. 4 in einer Draufsicht,
- Fig. 7: in einer Draufsicht entsprechend Fig. 6 den Laserscanner von Fig. 4 in einer zweiten Drehstellung der Ablenkeinrichtung,
- Fig. 8: eine perspektivische Ansicht des Laserscanners von Fig. 7,
- Fig. 9: schematisch eine Seitenansicht eines Laserscanners gemäß einer weiteren Ausführungsform der Erfindung in einer ersten Drehstellung der Ablenkeinrichtung, und
- Fig. 10: in einer Draufsicht den Laserscanner von Fig. 9 in einer zweiten Drehstellung der Ablenkeinrichtung.

Den nachstehend beschriebenen Ausführungsbeispielen einer erfindungsgemäßen Erfassungseinrichtung ist gemeinsam, dass die Erfassungseinrichtung jeweils als Laserscanner ausgebildet ist und eine um eine Drehachse 37 drehbare Ablenkeinrichtung 15 aufweist, wobei der Schnittpunkt der Drehachse 37 mit einer Ablenkfläche 31 der Ablenkeinrichtung 15 gleichzeitig der Mittelpunkt 39 einer Kugel ist, auf der eine das Innere des Laserscanners nach außen abschließende Frontscheibe 21 liegt. Bei der für die verwendete Strahlung durchlässigen Frontscheibe 21 handelt es sich folglich um einen Teil einer Kugelfläche.

Ferner ist allen Ausführungsbeispielen eine biaxiale Anordnung aus einem Sender 11 und einem Empfänger 13 gemeinsam. Die Begriffe "Sender" und "Empfänger" sind ganz allgemein dahingehend zu verstehen, dass jeweils nicht die vollständige Sendeeinrichtung bzw. Empfangseinrichtung des Laserscanners dargestellt ist. In den einzelnen Figuren lediglich dargestellt sind eine an einer Grundplatte 43 des Scanners angebrachte Empfangslinse des Empfängers 13 sowie eine in der Grundplatte 43 ausgebildete, im Sendepfad des Senders 11 gelegene Durchtrittsöffnung für die primäre Sendestrahlung 17.

Nicht dargestellt sind die bevorzugt in Form einer Laserdiode vorgesehene, zur Aussendung der Sendestrahlung 17 dienende Sendeeinheit sowie die in Form eines Einzelempfängers oder eines Empfangsdioden-Arrays vorgesehene Empfangseinheit, mit welcher aus der Umgebung des Scanners entlang des Empfangspfades reflektierte Strahlung nachgewiesen wird.

Der Empfangspfad des Scanners fällt mit der Drehachse 37 der Ablenkeinrichtung 15 zusammen, d.h. die Drehachse 37 verläuft durch den Mittelpunkt der kreisförmigen Empfangslinse 13. Die in der Grundplatte 43 ausgebildete Durchtrittsöffnung des Senders 11, an oder in der eine Sendelinse angeordnet sein kann, ist gegenüber der Drehachse 37 und damit gegenüber dem Empfangspfad versetzt angeordnet, wobei die von der Laserdiode abgegebene primäre Sendestrahlung 17 vor der Reflexion an der Ablenkfläche 31 der Ablenkeinrichtung 15 parallel zur Drehachse 37 und damit zum Empfangspfad verläuft. Mit anderen Worten: der Sendepfad und der Empfangspfad des Laserscanners verlaufen in den nachstehend beschriebenen Ausführungsbeispielen annähernd parallel versetzt zueinander.

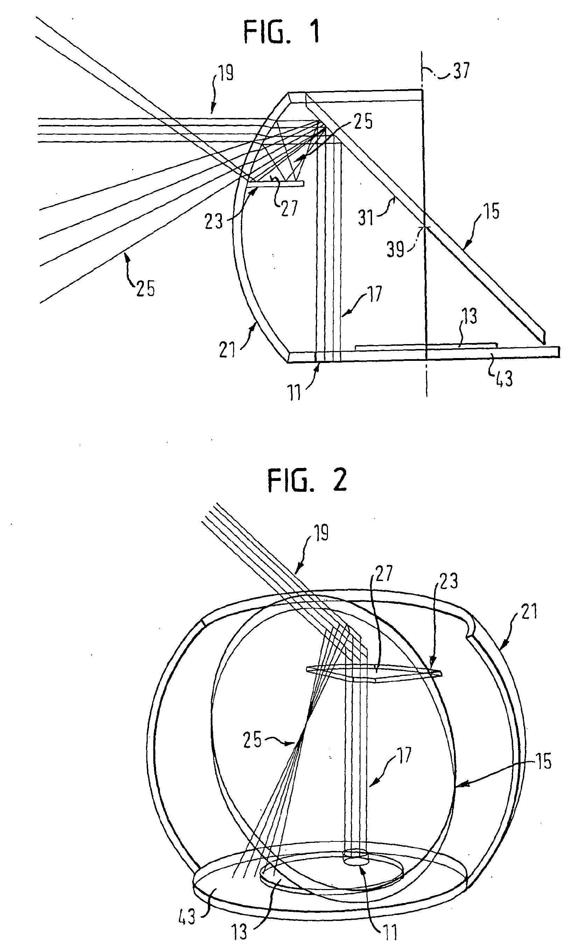

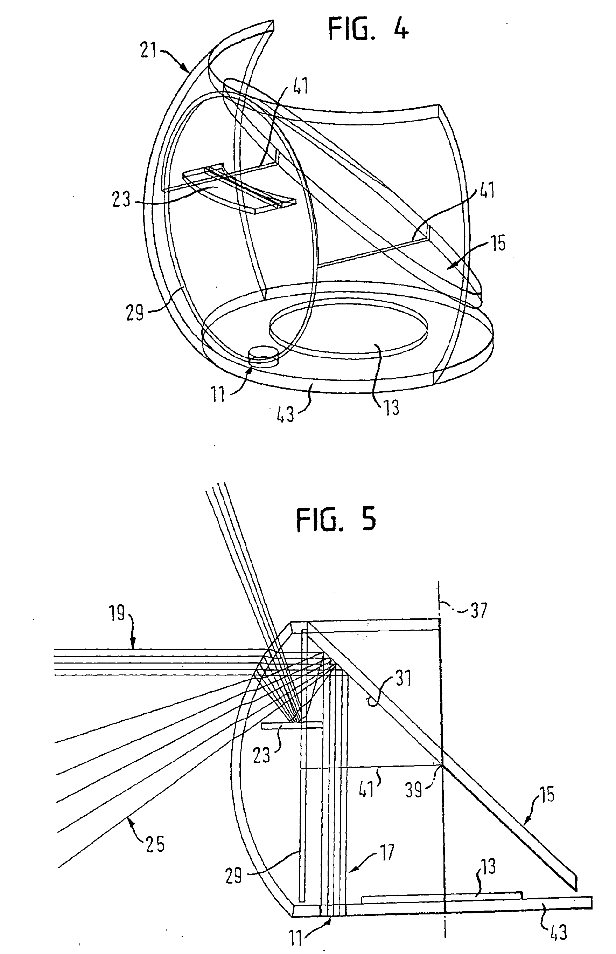

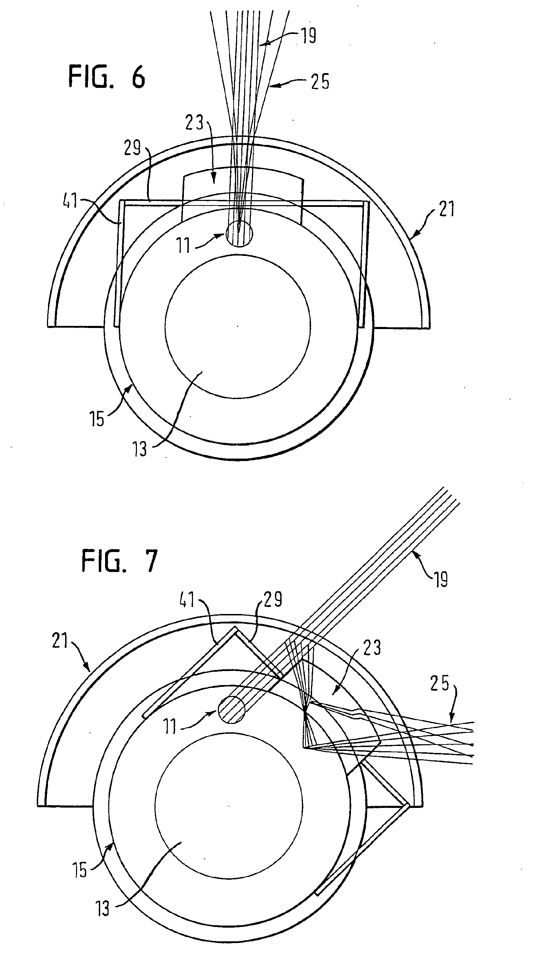

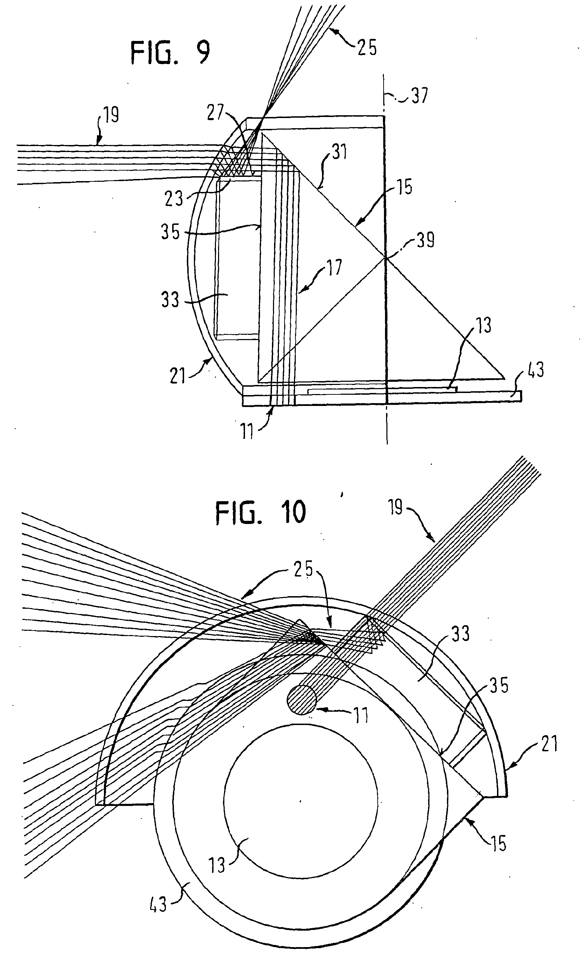

Diese Anordnung hat zur Folge, dass der Abstand des Auftreffpunktes der primären Sendestrahlung 17 auf der Ablenkfläche 31 vom Kugelmittelpunkt 39 und damit die Höhe der sekundären Sendestrahlung 19 nach Reflexion an der Ablenkfläche 31 von der Drehstellung der Ablenkeinrichtung 15 abhängig ist. In Fig. 1 (erstes Ausführungsbeispiel), Fig. 5 und 6 (zweites Ausführungsbeispiel) und Fig. 9 (drittes Ausführungsbeispiel) ist eine Extremstellung dargestellt, in welcher die Höhe der sekundären Sendestrahlung 19 maximal ist. Der Auftreffpunkt der sekundären Sendestrahlung 19 auf der Innenseite der kugelförmig gekrümmten Frontscheibe 21 befindet sich gewissermaßen im "Zenit". Bei einer Verdrehung der Ablenkeinrichtung 15 verringert sich der Abstand zwischen der Auftreffstelle der primären Sendestrahlung 17 auf der Ablenkfläche 31 und dem Kugelmittelpunkt 39, d.h. die sekundäre Sendestrahlung 19 und damit der Auftreffpunkt der sekundären Sendestrahlung 19 auf der Innenseite der Frontscheibe 21 "tauchen ab".

Die auch als 0°-Stellung bezeichnete "Zenit"-Stellung ist insofern am kritischsten, als hier die Steilheit der von der Innenseite der Frontscheibe 21 reflektierten Störstrahlung 25 am größten ist, d.h. die Störstrahlung 25 ohne die nachstehend näher erläuterten erfindungsgemäßen Maßnahmen mit maximaler Steilheit auf die Empfangslinse 13 treffen würde. Die störende Wirkung der von der Frontscheibe 21 reflektierten Störstrahlung 25 würde für von 0° abweichende Drehstellungen der Ablenkeinrichtung 15 nicht verschwinden, sondern lediglich abnehmen. In Abhängigkeit von der konkreten Bauform des Scanners kann der kritische Scanwinkelbereich durchaus +/-45° um die 0°-Stellung herum betragen.

Die vorstehend geschilderte Ausgangssituation ist bei allen nachstehend erläuterten Ausführungsbeispielen der Erfindung die gleiche. Die einzelnen Ausführungsbeispiele unterscheiden sich im Wesentlichen durch die Ausgestaltung der Ablenkeinrichtung 15 sowie durch die Ausgestaltung und Anordnung einer Blende 23, mit welcher der Empfänger 13 weitgehend oder vollständig gegenüber der Störstrahlung 25 abgeschirmt wird.

Die Erfindung ist nicht auf die dargestellte Anordnung mit einem einzigen Sender und einem einzigen Empfänger beschränkt. Die Ausführungsbeispiele können z.B. dahingehend variieren, dass statt eines einzigen Empfängers mehrere Empfänger vorgesehen sind. Auch ist es möglich, einen einzigen Empfänger zwischen zwei Sendern anzuordnen, und zwar beispielsweise derart, dass die Mittelpunkte der beiden seitlich des Empfängers angeordneten Sender bzw. Sendeoptiken auf einer Geraden liegen und der Empfänger bzw. eine Empfangsoptik nicht kreisförmig ausgebildet ist, sondern ausgehend von einer Kreisform an diametral einander gegenüber liegenden Seiten Kreisabschnitte weggeschnitten sind, so dass die in diesen Bereichen angeordneten Sender bzw. Sendeoptiken näher an den Mittelpunkt des Empfängers heranrücken können.

Bei dem Ausführungsbeispiel der Fig. 1 bis 3 ist eine mit der Frontscheibe 21 verbundene Blende 23 vorgesehen, die plattenförmig ausgebildet ist und im Vergleich zu ihrer flächenmäßigen Ausdehnung eine geringe Dicke aufweist. Die Blendenplatte 23 kann aus dem gleichen Kunststoffmaterial wie die Frontscheibe 21 bestehen und mit der Frontscheibe 21 verklebt sein. Die Blendenplatte 23 kann beispielsweise eingefärbt sein, um einen möglichst großen Anteil einfallender Störstrahlung 25 absorbieren zu können.

In diesem Ausführungsbeispiel ist die Blende 23 eine ebene Platte, d.h. die als Abschirmfläche 27 wirksame Oberseite der Platte 23 erstreckt sich in einer Ebene, wobei diese Ebene in diesem Ausführungsbeispiel parallel zur Äquatorebene der Frontscheibe 21 verläuft. Die Abschirmfläche 27 und damit die Blendenplatte 23 verlaufen somit senkrecht zur Ausbreitungsrichtung der primären Sendestrahlung 17 und parallel zur Ausbreitungsrichtung der sekundären Sendestrahlung 19. Aufgrund ihrer geringen Dicke wird die Empfangsapertur des Scanners durch die Blende 23 nur in einem sehr geringen Ausmaß reduziert.

In der 0°-Stellung gemäß Fig. 1 ist der Empfänger 13 durch die Blende 23 vollkommen vor Störstrahlung 25 geschützt, da der Frontscheibenreflex vollständig auf die Abschirmfläche 27 der Blende 23 auftrifft und die nicht von der Blende 23 absorbierte Störstrahlung 25 nach Reflexion an der Abschirmfläche 27 und der Ablenkfläche 31 der hier in Form eines Drehspiegels vorgesehenen Ablenkeinrichtung 15 nach außen abgelenkt wird, ohne sich in Richtung des Empfängers 13 ausbreiten zu können.

In diesem Ausführungsbeispiel ist die Blende 23 derart bemessen und angeordnet, dass der bei einer Verdrehung des Spiegels 15 aus der 0°-Stellung heraus abtauchende sekundäre Sendestrahl 19 die Blende 23 gerade nicht berührt. Gleichzeitig ist die Blende in dem kleinstmöglichen Abstand von der Grundplatte 43 angeordnet.

Bei von der 0°-Stellung abweichenden Drehstellungen des Spiegels 15 ist der Empfänger 13 in diesem Ausführungsbeispiel nicht mehr vollständig, aber für viele Applikationen immer noch ausreichend vor Störstrahlung 25 geschützt.

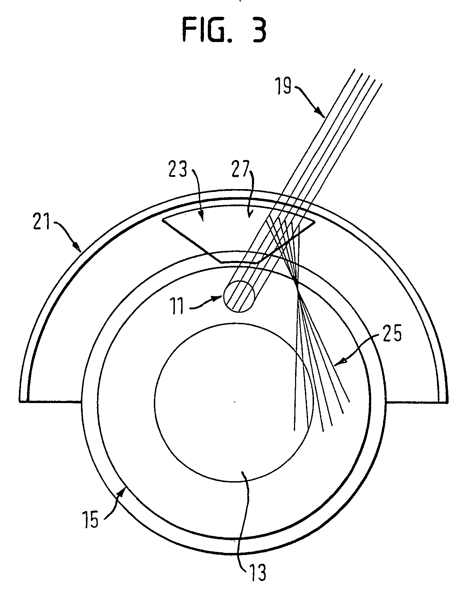

Die Fig. 2 und 3 zeigen eine Stellung, bei welcher der Spiegel 15 gegenüber der 0°-Stellung von Fig. 1 um 30° verdreht ist. Simulationsrechnungen für diesen Scanneraufbau haben ergeben, dass die Blende 23 den Frontscheibenreflex etwa ab einer Spiegelverdrehung von mehr als +/- 10° nicht mehr vollständig abfängt. Dennoch ist die mit dem Ausführungsbeispiel der Fig. 1 bis 3 erzielbare Unterdrückung der Störstrahlung 25 für zahlreiche Anwendungen vollkommen ausreichend.

Wie Fig. 2 und 3 zeigen, besitzt die ebene Blendenplatte 23 die Form eines Teils eines Kreisringes. Eine ähnliche Unterdrückung der Störstrahlung 25 wie mit dieser ebenen Blende 23 kann mit einer gebogenen Blende erzielt werden, die derart ausgebildet und angeordnet ist, dass die von der Blendenoberseite gebildete Abschirmfläche für jede Drehstellung des Spiegels 15 unmittelbar unterhalb des sekundären Sendestrahls 19 liegt. Bei der 0°-Stellung entsprechend Fig. 1 beispielsweise verläuft der sekundäre Sendestrahl 19 dann gerade über den Scheitelpunkt der gebogenen Blende hinweg. Zu berücksichtigen bei dieser gebogenen Blendenausführung ist, dass die Empfangsapertur gegenüber der Ausführungsform mit ebener Blendenplatte 23 reduziert ist.

Bei dem Ausführungsbeispiel der Fig. 4 bis 8 ist die ebenfalls plattenförmige, wiederum in Form eines Teils eines Kreisringes vorgesehene Blende 23 über einen Träger 29, auf den nachstehend näher eingegangen wird, mit dem Drehspiegel 15 verbunden, so dass sich die Blende 23 gemeinsam mit dem Spiegel 15 dreht.

Dieses erfindungsgemäße Konzept einer mitdrehenden Blende 23 zur Unterdrückung der Störstrahlung 25 basiert auf der Erkenntnis, dass aufgrund des gekrümmten Verlaufes der Frontscheibe 21 und der biaxialen Anordnung von Sender 11 und Empfänger 13 der Frontscheibenreflex, also die von der Innenseite der Frontscheibe 21 reflektierte Störstrahlung 25, der sekundären Sendestrahlung 19 vorauseilt, und zwar in einer Art und Weise, die von der Ausrichtung des Drehspiegels 15 abhängig ist.

Die Fig. 4 bis 8 zeigen ein konstruktiv besonders einfaches Beispiel zur Positionierung einer gemeinsam mit dem Spiegel 15 rotierenden Blende 23.

Die Blende 23 ist an einem Träger 29 angebracht, der in diesem Ausführungsbeispiel in Form einer ebenen kreisförmigen Scheibe vorgesehen ist, die sich senkrecht zur sekundären Sendestrahlung 19 und damit parallel zur primären Sendestrahlung 17 und zur Drehachse 37 des Spiegels 15 erstreckt. Die plattenförmige Blende 23 verläuft senkrecht zur Trägerscheibe 29. Die Scheibe 29 ist mit einem beispielsweise durch Ultraschallbohren hergestellten Schlitz versehen, in welchen die Blende 23 eingesteckt und in welchem die Blende 23 an der Scheibe 29 befestigt ist. Die Scheibe besteht aus einem für die verwendete Strahlung optisch transparenten Material, beispielsweise aus Glas oder Kunststoff. Über einen Halter 41, der als Schale mit halbkreisförmigem Querschnitt ausgebildet und mit seiner konvexen Seite voran auf den Drehspiegel 15 gesteckt ist, ist die Scheibe 29 fest mit dem Spiegel 15 verbunden. Hierzu kann die Scheibe 29 z.B. einfach von unten in den schalenförmigen Halter 41 eingesteckt werden. Alternativ können anstelle einer derartigen massiven, vollflächigen Schale als Halter für die Scheibe 29 auch mehrere dünne Streben vorgesehen sein, die sich zwischen dem Rand der Scheibe 29 einerseits und dem Rand des Spiegels 15 andererseits erstrecken.

Von der Innenseite der Trägerscheibe 39 reflektierte Sendestrahlung 19 wird wieder zurück auf den Sender 11 abgebildet, d.h. verbleibt im Sendepfad und stört den Empfangspfad nicht. Um Transmissionsverluste zu minimieren, kann die Trägerscheibe 29 beidseitig mit einer Antireflexbeschichtung versehen sein. Dies gilt ebenfalls für die Frontscheibe 21.

Bei rotierendem Drehspiegel 15 beschreibt die Auftreffstelle der sekundären Sendestrahlung 19 auf der Innenseite der Trägerscheibe 29 zwar eine kreisförmige Bahn am äußeren Rand der Scheibe, d.h. die sekundäre Sendestrahlung 19 tritt an unterschiedlichen Stellen durch die Trägerscheibe 29 hindurch, wobei jedoch der Einfallswinkel der sekundären Sendestrahlung 19 auf der Trägerscheibe 29 konstant bleibt. Folglich ändern sich die Abbildungseigenschaften nicht mit der Drehstellung des Drehspiegels 15. Es werden von der sekundären Sendestrahlung 19 ferner keine Sprungstellen, Stege oder Kanten durchlaufen, die zu Abbildungsfehlern führen könnten.

Folglich kann die Trägerscheibe 29 an der für die Blende 23 optimalen Position innerhalb des Scanners montiert werden, ohne die Abbildungsverhältnisse im Sendepfad zu stören.

Der Halter 41 zur Befestigung der Trägerscheibe 29 und damit der Blende 23 an dem rotierenden Spiegel 15 liegt vollständig außerhalb des Empfangspfades und des Sendepfades, so dass die Abbildungseigenschaften des Scanners durch den Halter 41 nicht beeinflusst werden.

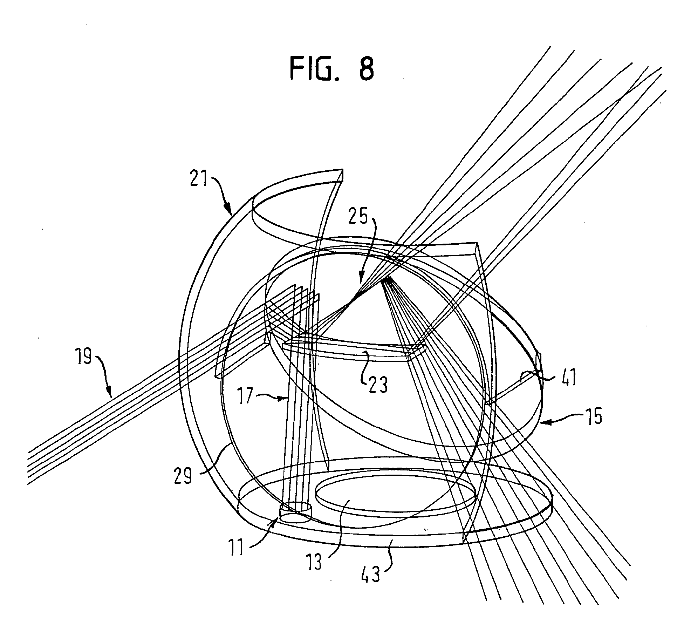

In der 0°-Stellung gemäß Fig. 5 und 6 ist der Empfänger 13 wiederum durch die Blende 23 vollständig gegenüber der Störstrahlung 25 abgeschirmt. Anders als bei dem Konzept der feststehenden, z.B. mit der Frontscheibe 21 verbundenen Blende 23, gilt dies bei dem Konzept der mitdrehenden Blende auch für von der 0°-Stellung abweichende Spiegelstellungen. Beispielhaft ist dies in den Fig. 7 und 8 für eine 45°-Stellung dargestellt. Der Frontscheibenreflex wird auch hier sicher nach außen abgelenkt, so dass keine Störstrahlung 25 auf den Empfänger 13 auftrifft.

Durch umfangreiche Simulationsrechnungen konnte belegt werden, dass das Konzept der mitdrehenden Blende universell wirksam ist insofern, als für jede Drehstellung des Spiegels 15 der Frontscheibenreflex derart abgelenkt wird, dass er niemals direkt auf die Empfangslinse 13 auftrifft. Diese Wirkung des Konzepts der mitdrehenden Blende ist direkt auf andere Konfigurationen, die von der Konfiguration in dem Ausführungsbeispiel der Fig. 4 bis 8 abweichen, übertragbar, beispielsweise auf diejenigen Konfigurationen, die vorstehend als mögliche Varianten erwähnt wurden.

In einer möglichen Variante dieses Ausführungsbeispiels der Fig. 4 bis 8 kann der Spiegel 15 durch ein Prisma ersetzt werden, an welchem ausgangsseitig die Blende 23 direkt angebracht ist.

In einer weiteren Variante kann die kreisförmige Trägerscheibe 29 durch einen Kreisring oder einen Abschnitt eines Kreisringes ersetzt werden. Der zentrale Bereich für den Empfangspfad würde hierdurch frei bleiben, wodurch entsprechende Transmissionsverluste aufgrund des Scheibenmaterials vermieden werden. Die Blende 23 würde dann derart breit ausgeführt sein, dass sie die Innenkante des Kreisringes berührt. Um eine bessere Führung zu erzielen, könnte die Blende 23 geringfügig von innen in den Kreisring eindringen.

Des Weiteren könnten alternativ anders geformte und insbesondere kleinere Scheiben verwendet werden, wobei dies vor allem für Sonderfälle interessant ist, wie beispielsweise für Scanner, die keinen vollen Sichtbereich von 360°, sondern lediglich einen Scanbereich von z.B. 180° aufweisen. Die Trägerscheibe könnte beispielsweise ausgehend von der Spiegelunterkante bis zur optischen Achse des Empfängers einen rechteckigen Verlauf aufweisen und anschließend in einen halbkreisförmigen Scheibenabschnitt übergehen, dessen Radius zumindest der projizierten Empfangsapertur entspricht. In dem Bereich des halbkreisförmigen Scheibenabschnitts wäre die Blende anzubringen. Die aufgrund der Drehung des Spiegels kreisförmige Bahn der sekundären Sendestrahlung 19 würde außerhalb dieses halbkreisförmigen Scheibenabschnitts verlaufen und somit aufgrund des lediglich 180° umfassenden Scanbereiches auch nicht auf den rechteckigen Abschnitt der Trägerscheibe treffen. Transmissionsverluste im Sendepfad oder andere Störungen aufgrund der Trägerscheibe würden hierdurch vermieden.

In so genannten Kegel-Scannern, bei denen die Sendestrahlung und die Empfangsstrahlung durch die Ablenkeinrichtung um einen kleineren oder größeren Winkel als 90° abgelenkt werden, weicht die Form einer optimalen Trägerscheibe für die Blende mit zunehmender Abweichung von dem 90°-Ablenkwinkel immer mehr von einer Kreisform ab und geht in eine zunehmend ovale Form über.

Statt an einem Halter 41, wie er vorstehend beschrieben wurde, könnte die zur Anbringung der Blende 23 dienende Trägerscheibe 29 gemäß einem weiteren bevorzugten Ausführungsbeispiel mit ihrem oberen Ende direkt an dem vorderen oberen Bereich des Drehspiegels 15 und mit ihrem unteren Ende an dem vorderen Bereich eines zusätzlichen Halteelementes in Form einer Platte oder Scheibe fixiert sein. Diese zusätzliche Haltescheibe würde sich horizontal, also senkrecht zur primären Sendestrahlung 17 erstrecken, d.h. die Haltescheibe würde parallel zur Grundplatte 43 verlaufend unmittelbar oberhalb des Empfängers 13 bzw. der Empfangslinse liegen.

Von der Seite gesehen würde somit der aus dem Drehspiegel 15, der Trägerscheibe 29 und der zusätzlichen Haltescheibe gebildete Körper wie ein aus drei Einzelscheiben aufgebautes Prisma aussehen, wobei die drei Einzelscheiben an ihren Berührungspunkten durch geeignete Mittel fest miteinander verbunden sind.

Die sich über den Empfänger 13 hinweg erstreckende zusätzliche Haltescheibe, über die die Trägerscheibe 29 im unteren, d.h. nahe dem Empfänger 13 gelegenen Bereich mit dem Drehspiegel 15 verbunden ist, kann aus einem für die verwendete Strahlung durchlässigen Material hergestellt sein. Alternativ oder zusätzlich kann in der zusätzlichen Haltescheibe eine Ausnehmung oder Öffnung für die Strahlung vorgesehen sein, die beispielsweise hinsichtlich Größe und Anordnung auf eine Empfangslinse des Empfängers 13 abgestimmt ist.

Das Ausführungsbeispiel der Fig. 9 und 10 zeigt eine weitere Möglichkeit, den Empfangspfad vor dem Frontscheibenreflex zu schützen, d.h. die von der Reflexion der Sendestrahlung an der Innenseite der Frontscheibe 21 herrührende Störstrahlung 25 vom Empfänger 13 fernzuhalten.

In diesem Ausführungsbeispiel ist anstelle eines Spiegels ein Prisma als Ablenkeinrichtung 15 für die Sendestrahlung und die Empfangsstrahlung vorgesehen. An die zur Frontscheibe 21 weisende Strahlungseintritts- und -austrittsfläche 35 des Prismas 15 ist ein Abschirmelement 33 in Form eines im Vergleich zu seinem Durchmesser kurzen Hohlzylinders oder Rohres angesetzt. Die Wandung 23 des Hohlzylinders 33 dient hier als den Empfänger 13 gegenüber der Störstrahlung 25 abschirmende Blende, d.h. die Außenseite 27 des Hohlzylinders 33 bildet die Abschirmfläche, an welcher die Störstrahlung 25 absorbiert bzw. reflektiert wird.

Die Länge des Hohlzylinders 33 ist derart gewählt, dass er möglichst nahe an die Frontscheibe 21 heranreicht. Dieser Aufbau stellt sicher, dass der Frontscheibenreflex unabhängig von der Drehstellung des Prismas 15 nicht direkt in den Empfangspfad gelangen und über das Prisma 15 auf die Empfangslinse 13 abgebildet werden kann.

Die Befestigung des Hohlzylinders 33 am Prisma 15 erfolgt beispielsweise durch Verkleben. Bevorzugt ist die Außenseite des Hohlzylinders 33 derart beschichtet, dass ein möglichst großer Anteil der einfallenden Störstrahlung 25 absorbiert wird. Gleichzeitig wird die Außenseite des Rohres 33 derart ausgebildet, dass sie spiegelnde Eigenschaften aufweist, um zu vermeiden, dass der nicht absorbierte Anteil der Störstrahlung 25 unkontrolliert gestreut und über das Prisma auf die Empfangslinse 13 abgebildet wird.

Zusätzlich zu der Blende 23 können gemäß einer Weiterbildung der Erfindung im Inneren der Erfassungseinrichtung eine oder mehrere Zusatzblenden vorgesehen sein, die insbesondere dazu dienen, so genannte Sekundärreflexe, also Reflexe von Reflexen, abzufangen bzw. zu bedämpfen. Hierzu kann gemäß einer bevorzugten Weiterbildung der Erfindung der kegelförmige Raum oberhalb des Empfängers 13 ausgenutzt werden, dessen Kegelform durch die relativ zum Empfänger 13 rotierende Ablenkfläche 31 des Drehspiegels 15 herrührt, d.h. dieser kegelförmige Raum wird durch den sich drehenden Spiegel 15 nicht beeinflusst bzw. zusätzliche Bauelemente innerhalb dieses kegelförmigen Raumes stören die Drehbewegung des Spiegels 15 nicht.

Diese Weiterbildung der Erfindung sieht vor, dass in dem Kegelraum eine oder mehrere senkrechte Zusatzblenden angeordnet werden, wobei diese Zusatzblenden platten- oder scheibenförmig ausgebildet sind und eine im Vergleich zu den Abmessungen des Empfängers 13 bzw. der Empfangslinse geringe Dicke aufweisen. Diese Zusatzblenden werden bevorzugt derart angeordnet, dass jeweils die von ihnen definierte Ebene parallel zur Empfangsstrahlung verläuft. Die Zusatzblenden stehen also senkrecht auf der Ebene des Empfängers 13 bzw. der Empfangslinse.

Die Anordnung dieser dünnen senkrechten Zusatzblenden kann auf verschiedene Art und Weise erfolgen. Mehrere Zusatzblenden können parallel zueinander oder senkrecht aufeinander stehend, d.h. gitter- oder kreuzförmig, angeordnet werden.

In einer Variante sind diese senkrecht stehenden Zusatzblenden fest mit der sich horizontal erstreckenden Empfangslinse des Empfängers 13 verbunden, d.h. die Zusatzblenden drehen sich nicht gemeinsam mit dem Spiegel 15. Alternativ können die senkrechten Zusatzblenden fest mit der vorstehend beschriebenen Haltescheibe verbunden werden, die sich horizontal über den Empfänger 13 hinweg erstreckt und dazu dient, die Trägerscheibe 29 und den Drehspiegel 15 im unteren Bereich miteinander zu verbinden. In dieser Variante nehmen die senkrechten Zusatzblenden somit an der Drehbewegung teil, drehen sich also relativ zu dem Empfänger 13. Insbesondere in dieser Variante sind die senkrechten Zusatzblenden bevorzugt derart angeordnet, dass sie lediglich parallel zueinander verlaufen, d.h. keine kreuz- oder gitterförmige Anordnung vorgesehen ist. Die Ausrichtung der parallelen Zusatzblenden ist dabei derart gewählt, dass sie parallel zur Ausbreitungsrichtung der Empfangsstrahlung vor und nach Umlenkung am Drehspiegel 15 verlaufen.

Die senkrechten Zusatzblenden sind aus einem für die verwendete Strahlung undurchlässigen Material hergestellt.

Es ist festgestellt worden, dass insbesondere dann, wenn die Frontscheibe 21 kugelförmig gekrümmt ist, bei einer Stellung des Drehspiegels 15 im Bereich von etwa 45° bis 75° zu beiden Seiten einer 0°-Stellung (die dadurch definiert ist, dass der Sendespot, d.h. der Auftreffpunkt der sekundären Sendestrahlung 19 auf der Innenseite der Frontscheibe 21 im "Zenit" steht) stets der Reflex des Frontscheibenreflexes, also der Sekundärreflex, in Form einer schmalen Linie auf den Empfänger 13 bzw. die Empfangslinse fällt. Des weiteren ist festgestellt worden, dass dieser linienförmige Sekundärreflex stets, d.h. unabhängig von der Stellung des Drehspiegels 15 in dem vorstehend genannten Winkelbereich, auf der gedachten kürzesten Verbindungslinie zwischen den Mittelachsen des Senders 11 und des Empfängers 13 liegt.

Gemäß einem weiteren bevorzugten Ausführungsbeispiel der Erfindung wird dementsprechend vorgeschlagen, auf den Empfänger 13 bzw. die Empfangslinse eine flache Zusatzblende aufzubringen, die derart bemessen und angeordnet wird, dass gerade der linienförmige Sekundärreflex ausgeblendet wird. Diese Zusatzblende kann beispielsweise in Form eines Klebestreifens oder eines Blechstreifens vorgesehen sein. Alternativ ist es möglich, diese Zusatzblende in Form von Lack auf den Empfänger 13 bzw. die Empfangslinse aufzubringen.

Beispielsweise folgende Varianten der vorstehend beschriebenen Ausführungsformen der Erfindung sind möglich:

Alternativ zu einer spiegelnden oder glänzenden Ausgestaltung können die Abschirmfläche 27 der Blende 23 bzw. die Außenseite des Rohres 33 auch derart ausgebildet sein, dass eine diffuse Streuung des nicht absorbierten Anteils der Störstrahlung 25 erfolgt. Hierdurch kann die Leistungsdichte der nicht absorbierten Störstrahlung im Inneren der Erfassungseinrichtung auf ein Minimum reduziert werden.

Die Form der Frontscheibe 21 kann von der Teilkugelform abweichen. So ist es beispielsweise möglich, eine Frontscheibe vorzusehen, die eiförmig ausgebildet ist.

Vorstehend bereits erwähnt wurde eine von einer Kreisform abweichende Trägerscheibe 29, nämlich eine Trägerscheibe in Form eines Kreisringes oder eines Teils eines Kreisringes. Bevorzugt ist in einer derartigen Anordnung vorgesehen, dass die Empfangslinse 13 innerhalb eines Radius zu dem die Drehachse 37 des Spiegels liegt, der kleiner ist als der Radius zum der Drehachse 37 am nächsten liegenden Punkt des Senders 11.

Allgemein kann die Trägerscheibe derart geformt und/oder angeordnet sein, dass entweder der Sendepfad oder der Empfangspfad durch die Trägerscheibe unbeeinflusst ist, d.h. die Sendestrahlung bzw. die Empfangsstrahlung sich ungestört an der Trägerscheibe vorbei ausbreitet.

Ferner könnte der Empfangslinse 13 ein als so genannte "Lichtfalle" dienender, mit einer Mehrzahl von Blenden versehener Tubus nachgelagert sein. Ein derartiger Tubus kann dann besonders vorteilhaft sein, wenn ein weniger kompakter Aufbau des Scanners akzeptiert werden und so der Tubus vergleichsweise lang ausgeführt sein kann.

Des Weiteren ist es möglich, als drehbare Einheit eine Kugel aus Vollmaterial mit integriertem Drehspiegel und integrierter Blende vorzusehen. Zwischen dieser Drehkugel und der die Drehkugel umgebenden Frontscheibe kann ein beliebiges Medium vorgesehen sein, beispielsweise eine Flüssigkeit oder ein Gel.

In einer weiteren Variante können die optische Achse des Senders 11 und/oder die optische Achse des Empfängers 13 gegenüber der Drehachse 37 des Spiegels verkippt sein.

In Konfigurationen mit einem Empfänger 13 und mehreren Sendern 11 können letztere sowohl symmetrisch als auch asymmetrisch um den Empfänger 13 herum angeordnet werden.

Im Fall der Ausgestaltung der erfindungsgemäßen Erfassungseinrichtung als Scanner kann der Scanbereich grundsätzlich jeden beliebigen Winkel zwischen 0° und 360° annehmen.

Es ist nicht zwingend, dass die Drehachse 37 der Ablenkeinrichtung 15 mit der optischen Achse des Empfangspfades zusammenfällt. Abweichend von einer solchen koaxialen Anordnung kann ein Parallelversatz zwischen der Drehachse 37 und der optischen Achse des Empfangspfades vorgesehen sein.

Ferner kann mehr als eine einzige Blende 23 im Inneren der Erfassungseinrichtung vorgesehen sein. Es kann eine Mehrzahl von Blenden angeordnet sein, die beispielsweise jeweils eben ausgeführt sind und parallel zur Äquatorebene, jedoch in unterschiedlichen Höhen verlaufen. Bei Verwendung zweier Blenden beispielsweise kann die eine Blende oberhalb und die andere Blende unterhalb der Äquatorebene verlaufen. Alternativ oder zusätzlich ist es möglich, gekreuzte Blenden zu verwenden.

In einer weiteren Variante kann vorgesehen sein, dass die oder jede Blende als Kreisring mit parallel zur Äquatorebene liegender Ringebene ausgebildet ist, wobei der Kreisring an einer oder mehreren Stellen unterbrochen oder ausgespart ist, um einen Durchgang für die Sendestrahlung zu schaffen. Die Unterbrechungen des Kreisringes können derart realisiert werden, dass die Blende in Umfangsrichtung mit Abstand voneinander angeordnete Kreisringsegmente umfasst, zwischen denen die Sendestrahlung ungestört hindurchtreten kann. Mit derartigen Blenden wird folglich eine praktisch vollumfängliche Abschirmung des Empfängers erzielt, wobei die Sendestrahlung jedoch unbeeinflusst ist.

Ein Hohlzylinder oder Rohr 33, wie es in Verbindung mit der Ausführungsform gemäß den Fig. 9 und 10 beschrieben wurde, kann auch in Verbindung mit einem Spiegel als Ablenkeinrichtung 15 und dem Spiegel vorgelagerter Trägerscheibe 29 entsprechend dem Ausführungsbeispiel in den Fig. 4 bis 8 vorgesehen sein. Anstelle eines plattenförmigen Elementes ist dann das Rohr als Blende zur Abschirmung des Empfangspfades gegenüber Störstrahlung vorgesehen. Das Rohr bzw. der Hohlzylinder kann z.B. direkt auf die Trägerscheibe geklebt sein.

Anstelle eines vollständigen, in Umfangsrichtung geschlossenen Rohres kann auch ein in Längsrichtung geteiltes Rohr vorgesehen sein.

Alle vorstehend beschriebenen Ausführungsbeispiele und Varianten können - sofern sie einander nicht widersprechen - miteinander kombiniert werden.

### Bezugszeichenliste

- 11: Sender
- 13: Empfänger
- 15: Ablenkeinrichtung
- 17: primäre Sendestrahlung
- 19: sekundäre Sendestrahlung
- 21: Frontscheibe
- 23: Blende
- 25: Störstrahlung
- 27: Abschirmfläche
- 29: Träger
- 31: Ablenkfläche
- 33: Abschirmelement
- 35: Strahlungseintritts- und -austrittsfläche
- 37: Drehachse
- 39: Kugelmittelpunkt
- 41: Halter
- 43: Grundplatte

## Patentansprüche

1. Optoelektronische Erfassungseinrichtung, insbesondere Laserscanner, mit wenigstens einem Sender (11) zur Aussendung bevorzugt gepulster elektromagnetischer Strahlung, zumindest einem dem Sender (11) zugeordneten Empfänger (13) und wenigstens einer Ablenkeinrichtung (15), mit der von dem Sender (11) ausgesandte primäre Sendestrahlung (17) als sekundäre Sendestrahlung (19) in einen Überwachungsbereich und aus dem Überwachungsbereich reflektierte Strahlung auf den Empfänger (13) lenkbar ist, wobei die optischen Achsen des Senders (11) und des Empfängers (13) auseinander fallen,
**dadurch gekennzeichnet,**
**dass** eine wenigstens bereichsweise gekrümmte Frontscheibe (21) vorgesehen ist, durch welche zumindest die Sendestrahlung (19) hindurchtritt, und dass im Inneren der Erfassungseinrichtung wenigstens eine Blende (23) angeordnet ist, die den Empfänger (13) zumindest gegenüber einem Teil der von der Innenseite der Frontscheibe (21) reflektierten Störstrahlung (25) abschirmt.

2. Optoelektronische Erfassungseinrichtung nach Anspruch 1,
**dadurch gekennzeichnet,**
**dass** die Blende (23) eine Abschirmfläche (27) für die Störstrahlung (25) aufweist, deren Form in Abhängigkeit von dem mittels der Ablenkeinrichtung (15) erzeugten Ablenkwinkel für die Strahlung ausgebildet ist.

3. Optoelektronische Erfassungseinrichtung nach Anspruch 2,
**dadurch gekennzeichnet,**
**dass** die Abschirmfläche (27) zumindest mit einer Komponente im Wesentlichen senkrecht zur Ausbreitungsrichtung der primären, sich vor der Ablenkeinrichtung (15) ausbreitenden Sendestrahlung (17) verläuft.

4. Optoelektronische Erfassungseinrichtung nach Anspruch 2 oder 3,
**dadurch gekennzeichnet,**
**dass** die Abschirmfläche (27) zumindest mit einer Komponente im Wesentlichen parallel zur Ausbreitungsrichtung der sekundären, sich in dem Bereich zwischen der Ablenkeinrichtung (15) und der Frontscheibe (21) ausbreitenden Sendestrahlung (19) verläuft.

5. Optoelektronische Erfassungseinrichtung nach einem der Ansprüche 2 bis 4,
**dadurch gekennzeichnet,**
**dass** die Abschirmfläche (27) eine ebene Fläche ist.

6. Optoelektronische Erfassungseinrichtung nach einem der Ansprüche 2 bis 5,
**dadurch gekennzeichnet,**
**dass** die Abschirmfläche (27) teilkreisförmig ist und insbesondere die Form eines Teils eines Kreisringes oder Kreissektors aufweist.

7. Optoelektronische Erfassungseinrichtung nach einem der Ansprüche 2 bis 4,
**dadurch gekennzeichnet,**
**dass** die Abschirmfläche (27) gekrümmt verläuft und insbesondere ein Teil einer Kegelfläche ist.

8. Optoelektronische Erfassungseinrichtung nach einem der vorhergehenden Ansprüche,
**dadurch gekennzeichnet,**
**dass** die Blende (23) platten- oder scheibenförmig ausgebildet ist.

9. Optoelektronische Erfassungseinrichtung nach einem der vorhergehenden Ansprüche,
**dadurch gekennzeichnet,**
**dass** die Blende (23) mit der Frontscheibe (21) verbunden ist.

10. Optoelektronische Erfassungseinrichtung nach einem der vorhergehenden Ansprüche,
**dadurch gekennzeichnet,**
**dass** die Ablenkeinrichtung (15) zu einer Bewegung relativ zum Sender (11) und zum Empfänger (13) antreibbar ist, wobei die Frontscheibe (21) relativ zur Ablenkeinrichtung (15) feststehend angeordnet ist.

11. Optoelektronische Erfassungseinrichtung nach Anspruch 10,
**dadurch gekennzeichnet,**
**dass** die Blende (23) relativ zur Frontscheibe (21) bewegbar ist.

12. Optoelektronische Erfassungseinrichtung nach Anspruch 10 oder 11,
**dadurch gekennzeichnet,**
**dass** die Blende (23) relativ zur Ablenkeinrichtung (15) feststehend angeordnet ist.

13. Optoelektronische Erfassungseinrichtung nach einem der Ansprüche 10 bis 12,
**dadurch gekennzeichnet,**
**dass** die Blende (23) gemeinsam mit der Ablenkeinrichtung (15) bewegbar ist.

14. Optoelektronische Erfassungseinrichtung nach einem der Ansprüche 10 bis 13,
**dadurch gekennzeichnet,**
**dass** die Blende (23) mit der Ablenkeinrichtung (15) verbunden ist.

15. Optoelektronische Erfassungseinrichtung nach einem der vorhergehenden Ansprüche,
**dadurch gekennzeichnet,**
**dass** die Blende (23) derart angeordnet und ausgebildet ist, dass der Sendepfad für die in den Überwachungsbereich ausgesandte Sendestrahlung (17, 19) von der Blende (23) unbeeinflusst ist, vorzugsweise für jede Stellung der bewegbaren Ablenkeinrichtung (15).

16. Optoelektronische Erfassungseinrichtung nach einem der vorhergehenden Ansprüche,
**dadurch gekennzeichnet,**
**dass** die Blende (23) an einem direkt mit der Ablenkeinrichtung (15) verbundenen Träger (29) angebracht ist.

17. Optoelektronische Erfassungseinrichtung nach Anspruch 16,
**dadurch gekennzeichnet,**
**dass** der Träger (29) zwischen der Frontscheibe (21) und einer Ablenkfläche (31) der Ablenkeinrichtung (15) angeordnet ist.

18. Optoelektronische Erfassungseinrichtung nach Anspruch 16 oder 17,
**dadurch gekennzeichnet,**
**dass** der Träger (29) sowohl den Sendepfad für die in den Überwachungsbereich ausgesandte Sendestrahlung (19) als auch den Empfangspfad für die aus dem Überwachungsbereich reflektierte Empfangsstrahlung abdeckt.

19. Optoelektronische Erfassungseinrichtung nach Anspruch 16 oder 17,
**dadurch gekennzeichnet,**
**dass** der Träger (29) derart geformt und/oder angeordnet ist, dass entweder der Sendepfad oder der Empfangspfad durch den Träger (29) unbeeinflusst ist.

20. Optoelektronische Erfassungseinrichtung nach einem der Ansprüche 16 bis 19,
**dadurch gekennzeichnet,**
**dass** der Träger (29) in Form einer im Wesentlichen senkrecht zur Ausbreitungsrichtung der sekundären Sendestrahlung (19) verlaufenden Scheibe vorgesehen ist.

21. Optoelektronische Erfassungseinrichtung nach einem der Ansprüche 16 bis 19,
**dadurch gekennzeichnet,**
**dass** der Träger (29) in Form einer Linse oder eines Teils einer Kugel vorgesehen ist.

22. Optoelektronische Erfassungseinrichtung nach einem der vorhergehenden Ansprüche,
**dadurch gekennzeichnet,**
**dass** ein Träger (29) für die Blende (23) zum einen direkt an einem vorderen oberen Bereich der insbesondere in Form eines bevorzugt kreisscheibenförmigen Drehspiegels vorgesehenen Ablenkeinrichtung (15) und zum anderen an einem vorderen Bereich eines insbesondere platten- oder scheibenförmigen Halteelementes fixiert ist, das sich im Wesentlichen senkrecht zur primären Sendestrahlung (17) erstreckt und mit seinem hinteren Bereich an einem hinteren unteren Bereich der Ablenkeinrichtung (15) fixiert ist, wobei vorzugsweise das Halteelement aus einem für die verwendete Strahlung durchlässigen Material hergestellt und/oder im Bereich zumindest des Empfangspfades mit einer Ausnehmung oder Öffnung für die Strahlung versehen ist.

23. Optoelektronische Erfassungseinrichtung nach einem der vorhergehenden Ansprüche,
**dadurch gekennzeichnet,**
**dass** die Blende (23) von einem der Ablenkeinrichtung (15) vorgelagerten Abschirmelement (33) gebildet ist, wobei eine Abschirmfläche (27) für die Störstrahlung (25) von einer Außenwand des Abschirmelementes (33) gebildet ist.

24. Optoelektronische Erfassungseinrichtung nach Anspruch 23,
**dadurch gekennzeichnet,**
**dass** das Abschirmelement (33) in Form eines Zylinders, insbesondere eines hohlzylindrischen Rohrabschnitts, vorgesehen ist, dessen Längsachse im Wesentlichen senkrecht zur Ausbreitungsrichtung der primären Sendestrahlung (17) und im Wesentlichen parallel zur Ausbreitungsrichtung der sekundären Sendestrahlung (19) verläuft.

25. Optoelektronische Erfassungseinrichtung nach Anspruch 23 oder 24,
**dadurch gekennzeichnet,**
**dass** das Abschirmelement (33) mit einem als Ablenkeinrichtung (15) vorgesehenen Prisma verbunden und insbesondere direkt auf eine Strahlungseintritts- und -austrittsfläche (35) des Prismas aufgesetzt ist.

26. Optoelektronische Erfassungseinrichtung nach einem der vorhergehenden Ansprüche,
**dadurch gekennzeichnet,**
**dass** in dem Raum zwischen einer Ablenkfläche (31) der Ablenkeinrichtung (15) und dem Empfänger (13) wenigstens eine platten- oder scheibenförmige Zusatzblende angeordnet ist, wobei vorzugsweise die von der Ablenkeinrichtung (15) auf den Empfänger (13) gelenkte Empfangsstrahlung und die Ebene, in welcher die Zusatzblende liegt, zumindest im Wesentlichen parallel zueinander verlaufen.

27. Optoelektronische Erfassungseinrichtung nach Anspruch 26,
**dadurch gekennzeichnet,**
**dass** die Ebene, in welcher die Zusatzblende liegt, zumindest im Wesentlichen parallel zu der Ausbreitungsrichtung der Empfangsstrahlung verläuft.

28. Optoelektronische Erfassungseinrichtung nach einem der vorhergehenden Ansprüche,
**dadurch gekennzeichnet,**
**dass** dem Empfänger (13), insbesondere einer Empfangslinse des Empfängers (13), wenigstens eine strich-, linien- oder streifenförmige Zusatzblende vorgelagert ist, deren Ausdehnung und Orientierung entsprechend einem erwarteten, insbesondere sekundären Störstrahlungsreflex gewählt ist, wobei bevorzugt die Zusatzblende direkt auf den Empfänger (13) aufgebracht ist.

29. Optoelektronische Erfassungseinrichtung nach einem der vorhergehenden Ansprüche,
**dadurch gekennzeichnet,**
**dass** sich die Zusatzblende längs einer gedachten kürzesten Verbindungslinie zwischen den Mittelachsen des Senders (11) und des Empfängers (13) erstreckt.

30. Optoelektronische Erfassungseinrichtung nach einem der vorhergehenden Ansprüche,
**dadurch gekennzeichnet,**
**dass** die Sendestrahlung und die Empfangsstrahlung mittels der Ablenkeinrichtung (15) um 90° umlenkbar sind.

31. Optoelektronische Erfassungseinrichtung nach einem der vorhergehenden Ansprüche,
**dadurch gekennzeichnet,**
**dass** die Ablenkeinrichtung (15) zu einer Drehbewegung relativ zum Sender (11) und zum Empfänger (13) antreibbar ist.

32. Optoelektronische Erfassungseinrichtung nach Anspruch 31,
**dadurch gekennzeichnet,**
**dass** die Drehachse (37) der Ablenkeinrichtung (15) im Wesentlichen parallel zur Ausbreitungsrichtung der primären Sendestrahlung (17) verläuft.

33. Optoelektronische Erfassungseinrichtung nach einem der vorhergehenden Ansprüche,
**dadurch gekennzeichnet,**
**dass** der gekrümmte Bereich der Frontscheibe (21) zumindest als Teil einer Kugel ausgebildet ist.

34. Optoelektronische Erfassungseinrichtung nach Anspruch 33,
**dadurch gekennzeichnet,**
**dass** der Kugelmittelpunkt (39) auf einer Drehachse (37) der Ablenkeinrichtung (15) gelegen ist.

35. Optoelektronische Erfassungseinrichtung nach Anspruch 33 oder 34,
**dadurch gekennzeichnet,**
**dass** der Kugelmittelpunkt (39) auf einer Ablenkfläche (31) der Ablenkeinrichtung (15) gelegen ist.

36. Optoelektronische Erfassungseinrichtung nach einem der Ansprüche 31 bis 35,
**dadurch gekennzeichnet,**
**dass** eine Drehachse (37) der Ablenkeinrichtung (15) mit dem Empfangspfad für die aus dem Überwachungsbereich reflektierte Empfangsstrahlung zusammenfällt.

37. Optoelektronische Erfassungseinrichtung nach einem der Ansprüche 31 bis 36,
**dadurch gekennzeichnet,**
**dass** sich die Längsachse eines der Ablenkeinrichtung (15) vorgelagerten Abschirmelementes (33), insbesondere eines hohlzylindrischen Rohrabschnitts, mit einer Drehachse (37) der Ablenkeinrichtung (15) auf deren Ablenkfläche (31) schneidet.

38. Optoelektronische Erfassungseinrichtung nach einem der vorhergehenden Ansprüche,
**dadurch gekennzeichnet,**
**dass** die Ablenkeinrichtung (15) wenigstens einen Spiegel umfasst.

39. Optoelektronische Erfassungseinrichtung nach einem der vorhergehenden Ansprüche,
**dadurch gekennzeichnet,**
**dass** die Ablenkeinrichtung (15) wenigstens ein Prisma umfasst.

40. Optoelektronische Erfassungseinrichtung nach einem der vorhergehenden Ansprüche,
**dadurch gekennzeichnet,**
**dass** die Blende (23) bezüglich der Störstrahlung (25) absorbierend ausgebildet ist, insbesondere durch Einfärben und/oder durch Aufbringen einer Absorptionsbeschichtung.

41. Optoelektronische Erfassungseinrichtung nach einem der vorhergehenden Ansprüche,
**dadurch gekennzeichnet,**
**dass** die Blende (23) bezüglich der Störstrahlung (25) spiegelnd ausgebildet ist.

42. Optoelektronische Erfassungseinrichtung nach einem der Ansprüche 1 bis 40,
**dadurch gekennzeichnet,**
**dass** die Blende (23) bezüglich der Störstrahlung (25) diffus streuend ausgebildet ist.

43. Optoelektronische Erfassungseinrichtung nach einem der vorhergehenden Ansprüche,
**dadurch gekennzeichnet,**
**dass** eine oder mehrere in unterschiedlicher Höhe angeordnete, jeweils parallel zu einer Äquatorebene der Frontscheibe verlaufende ebene Blenden vorgesehen sind, die jeweils als mit Unterbrechungen oder Aussparungen für die Sendestrahlung versehener Kreisring oder Teilkreisring ausgebildet sind.
